# EUROPEAN PATENT APPLICATION

(11) **EP 1 800 831 A2**
(43) Date of publication of application: **27.06.2007**
(21) Application number: 06126292.9
(22) Date of filing: 18.12.2006
(51) Int. Cl.: B29C 47/50, B27N 3/28

(54) **Apparatus for extrusion pressing of loose wooden material and associated pressing method**

(30) Priority: 23.12.2005 IT MO20050348
(71) Applicant: Imal S.R.L., 41010 San Damaso, Modena (IT)
(72) Inventor: BENEDETTI, Paolo, 41010, MODENA - Frazione San Damaso (IT)
(74) Representative: Modiano, Micaela Nadia

(57) **Abstract**

An apparatus for producing conglomerates of various material by extrusion pressing of loose material, comprising a first pressing chamber (11) and a second pressing chamber (16, 16a; 30), the first chamber (11) being designed for a preliminary pressing operation and being connected to the second chamber (16, 16a; 30) which also constitutes an extrusion channel.

## Description

The present invention relates to an apparatus for producing solid or hollow conglomerates of various material by pressing and extrusion of loose material (for example wooden material).

The invention relates to the method for extrusion pressing of flakes, fragments and waste of loose material (for example wood in general, foliage and others).

The currently known method for producing conglomerates by extrusion pressing of various material (for example loose wooden material, such as wooden flakes, fragments and waste in general, foliage, et cetera) provides, in a first system, for the use of a press which comprises a piston which can slide in a heated pressing channel, to which said various loose material is fed and within which (i.e., in the first and second pressing chambers) steam is injected. Another type of apparatus uses a screw feeder which substantially performs the functions of the piston.

In order to improve the efficiency of the machine described above and therefore obtain extruded products of high quality in compatible production times, solutions and procedures have been implemented which are aimed essentially at achieving the curing of the core of the manufactured article.

In particular, intermittent and continuous techniques are used for the injection of steam in points or along specific portions of the outer surface of the extruded element, and with adequate pressure values and high temperature, but new techniques and solutions suitable to provide decisive improvements in the sector are certainly desirable.

The aim of the present invention is to provide a highly efficient apparatus for the extrusion pressing of various material, by means of which it is possible to reduce the baking times of the extruded product and accelerate its hardening in all of its parts.

This aim is achieved by means of an apparatus for producing conglomerates of various material by extrusion pressing of said material. Such apparatuses are characterized in that they comprise a first pressing chamber and a second pressing chamber, into which steam is fed continuously or intermittently according to the different densities of the material used.

In the apparatus with piston pressing, the first chamber is designed for an operation of pre-pressing at a lower density and is arranged at a variable angle (for example at right angles) with respect to said second pressing and extrusion chamber, which also acts as a loader.

The arrangement of the two chambers and of the corresponding pistons is such that the lateral surface of said second chamber, or extrusion chamber with the piston fully retracted, acts as an abutment surface during the operation for loading into the second chamber, which is performed by means of the piston of the first chamber.

Steam is fed into the first pressing chamber preferably by injection, by means of the piston of said chamber or also laterally, and begins when the chosen density of the various material is reached; the same occurs in the second pressing chamber.

In the apparatus with screw-feeder pressing, the first chamber is designed for the pre-pressing operation and steam is fed by injection in the lateral surface of the first chamber as well as in the second pressing chamber or extrusion channel.

During the actual pressing step, steam is fed into the second chamber or extrusion channel by continuous or intermittent injection in one or more points of the lateral surface of said chamber, and in the final step the resulting vapors are aspirated.

According to another embodiment, in addition to what has been described above, steam is introduced centrally with respect to the piston of said second chamber by means of a tube which injects steam directly into the internal central region of the extruded element and at the same time, during the final step, vacuum is produced and the vapors produced in said region during the step for baking said extruded element are aspirated.

The method for extrusion pressing of various loose material provides, for the production of the two conglomerates of material (solid and hollow), the following steps:
- a step of loading the various material which arrives in a first pressing chamber;
- a second step of pressing the material in a second pressing and extrusion chamber;
- a third step of baking the extruded element in said second chamber or extrusion channel;
- a final step, wherein vacuum is produced at the end of the channel by suction of the vapors within the conglomerates.

In the first three steps, steam may or may not be injected into the respective pressing chambers. In the production of solid conglomerate, the injection of steam performed in the first step begins at the chosen density depending on the types of the various materials used in the first chamber. Steam injection occurs advantageously by means of circuits which are obtained in the pressing piston or also laterally.

The injection of steam performed in the second step occurs continuously or intermittently in one or more portions of the lateral surface of the extrusion channel or secondarily while the loose various material is simultaneously pressed. At the end of the extrusion channel, after the inflow of the steam, vacuum begins by aspirating the vapors. In a second embodiment for the production of hollow conglomerate, additional steam is injected into the internal central region of the extruded element in addition to said steam injection.

Moreover, simultaneously with the baking step, an operation for aspirating the vapors within the conglomerate and in the internal central region of the extruded element occurs.

In the screw-feeder pressing apparatus, the process remains identical, except that the variable screw feeder is arranged in the place of the pistons.

The characteristics outlined above show evident advantages, with respect to traditional extrusion pressing apparatuses and methods, particularly in relation to the reduction of the baking and curing times of the extruded element.

Further characteristics and advantages of the present invention will become better apparent from the following detailed description of a preferred but not exclusive embodiment of the invention, illustrated by way of non-limiting example in the accompanying figures, wherein:
Figure 1 is a schematic sectional view of a pressing apparatus according to a first embodiment of the invention;
Figure 2 is another longitudinal sectional view of the apparatus of Figure 1 in a different operating configuration;
Figure 3 is a view of a second embodiment of the invention;
Figure 4 is another longitudinal sectional view of the apparatus of Figure 3 in a different operating configuration;
Figure 5 is a view of another method for production by means of the screw feeder, which maintains the same references as the preceding figures;
Figure 6 is a view of a third embodiment of the invention for provision on a hollow article.

With reference to the figures, the reference numeral 10 generally designates an apparatus for producing conglomerates of various material by extrusion pressing of the loose material.

In the apparatus with piston pressing, the input material enters, together with the resins or other material (bonding agent or not), a first chamber 11 through a feed duct 12, which is closed when a presser piston 14, which is present in the chamber 11, begins its compression stroke.

It should be noted that in this step the chamber 11 is delimited, on the opposite side with respect to the side with the piston 14, by a second presser piston 15, which can slide in a second chamber 16 which constitutes the actual extrusion channel of the material. The piston 15, in this step, is in such a position, shown in the accompanying figures, as to block the chamber 11; the wall 15a acts as an abutment in the compression stroke of the piston 14.

Such piston is provided with channels or holes 19 for feeding steam, which enters the pressing chamber 11 through holes 19 which are formed in the advancement surface of the piston and laterally.

Openings 20 are present in the lateral surfaces of the chamber or extrusion channel 16, and additional steam flows through said openings toward the extruded element while the suction channels 23 aspirate the vapors inside the extruded conglomerate.

The chamber 16 is heated by means of a hot fluid through the channels 22.

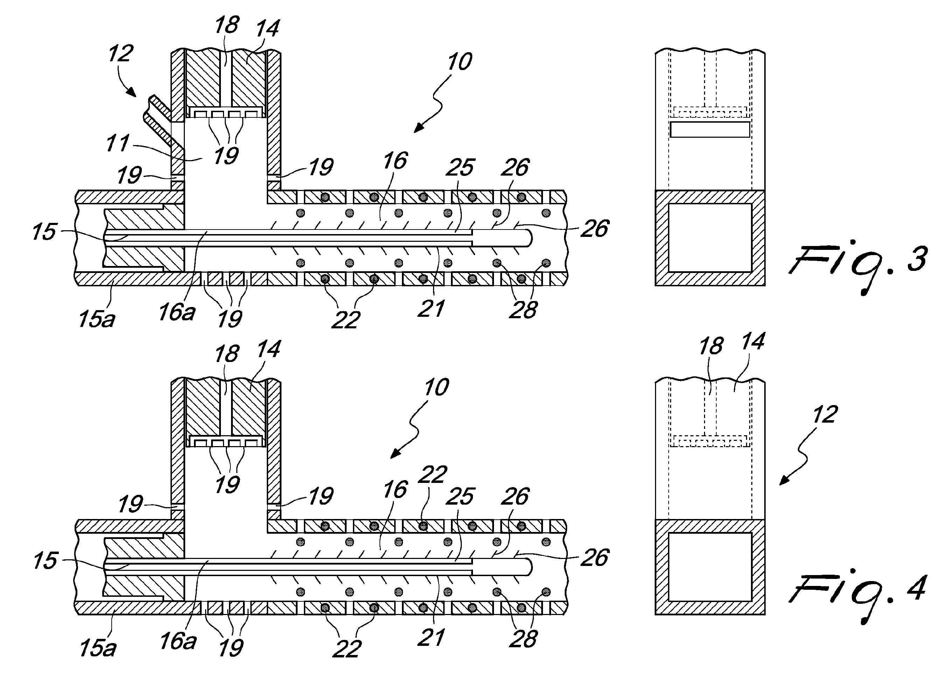

In the second embodiment, used to produce hollow conglomerate, shown in Figure 3, the steam also reaches the central region of the extruded element by means of one or more perforated tubes 21, which are arranged centrally with respect to the presser piston 15 of the second chamber or extrusion channel 16 and through the openings 20 provided at the sides.

By means of an additional tube 25, which is concentric with respect to the tube 21, the vapors that form inside the extruded element during the corresponding baking step are aspirated through the holes 26 and 28; such baking step is obtained by heating the extrusion channel with known methods, such as the circulation, within appropriately provided channels 22, of a fluid at high temperature, such as diathermic oil, steam or other fluids.

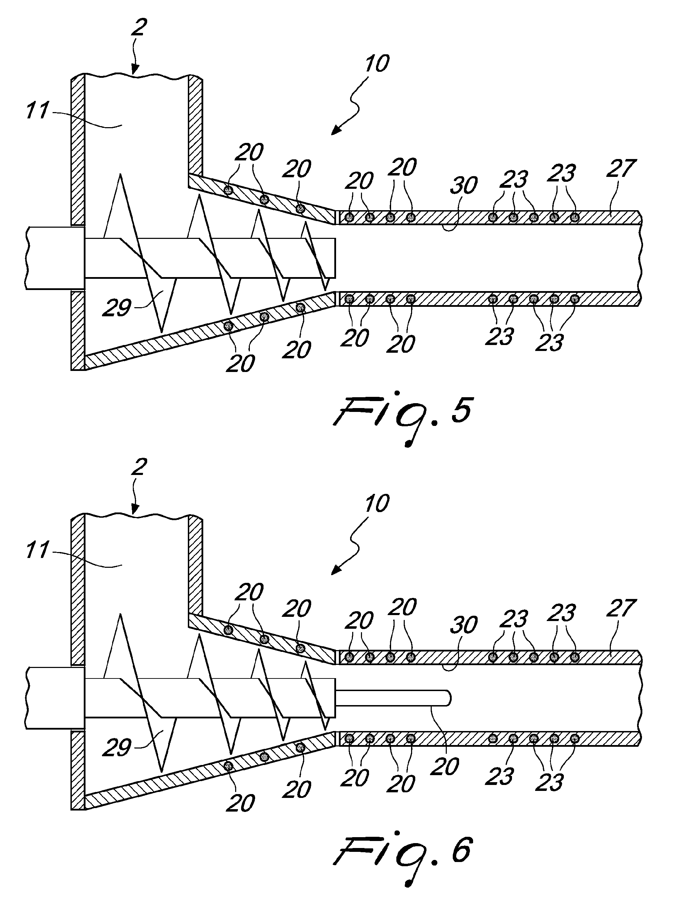

In the apparatus with screw-feeder pressing shown in Figure 5, loose material 2 is introduced in the screw feeder. After insertion, a step of continuous pressing of the material begins and the material then enters the next chamber. Steam is introduced in the first chamber 11 by means of the openings 20 provided in the surface of the screw feeder in order to accelerate the baking step, which also continues in the second chamber 16. After the step of injecting steam into the second chamber 16, there may be a settling area 27 before the area for aspirating the vapors produced by the material being baked, said aspiration occurring through the suction channels 23.

Figure 6 illustrates a third embodiment of the screw-feeder system in which the production of a hollow conglomerate is obtained.

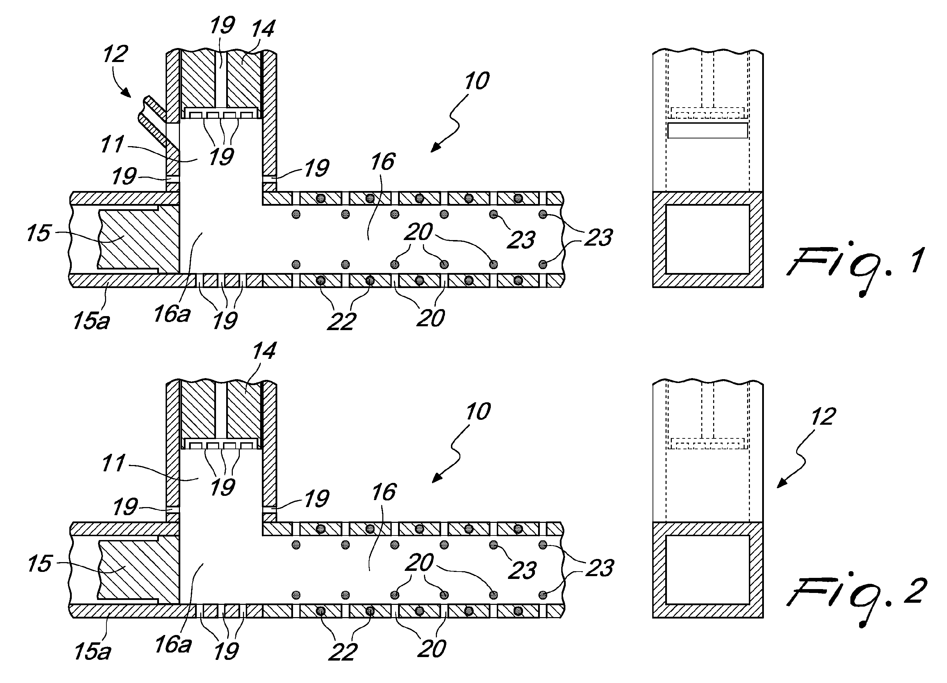

The first extrusion pressing system (Figures 1, 2, 3, and 4), provided with the apparatus described above, provides for the execution of the following steps.

While the first piston 14 of the first chamber 11 is arranged in the retracted position and the second piston 15 of the second chamber 16 is arranged in the retracted position, the loose various material and the corresponding resins and binding agents are introduced in a chamber portion 16a, of the second chamber 16, from the chamber 11 through the feed duct 12.

Simultaneously with the introduction of the material in the chamber 11, steam is also fed through the injection channels 19 and the sides of the first chamber 11, and therefore along the loading stroke of the preloading piston, while steam is emitted laterally through the openings 20. Central and lateral aspiration also occur.

In the embodiment of Figures 1 and 2, the material thus compressed is then transferred to the chamber portion 16a of the second pressing chamber, with the piston 15 in the retracted position, and then the second pressing step, suitable to give the extruded element its final shape, begins.

During this step, steam is fed continuously or intermittently through the openings 20 of the second chamber or extrusion channel 16, accelerating its baking. Suction through the channels 23 extracts the vapors that have formed in the conglomerate.

The second embodiment, which produces the hollow conglomerate (Figures 3 and 4), uses a different pressing method, which provides in this step for the feeding of steam laterally from the outside of the extruded element through the openings 20 and through the perforated tube 21.

Injection of steam through the holes of the tube 21 in the central region of the extruded element facilitates and assists baking, which in any case is performed mainly, as a final step of the process, by virtue of the heating of the extrusion channel or chamber 16 according to traditional techniques and methods.

Moreover, in the final step the vapors produced inside the extruded element are aspirated through the additional central tube 25 and the holes 26 arranged laterally.

By way of the aspiration of the vapors that form inside the extruded element, the risks of production defects, such as cracks or bursting of the manufactured article, linked to the pressure generated by said vapors, are reduced considerably. The emissions of polluting gases as a consequence of the curing of the resins used in the process are also reduced and the baking time is also shortened, and so is the length of the corresponding channel.

The injection of steam starting from when the loose material is introduced in the first pressing chamber 11, by bringing the compound instantly to the appropriate temperature, helps to shorten considerably the cooking and curing times of the resins. Further, by virtue of the injection, a much lower compression force is required for an equal quantity and volume of material, and therefore the required pressing apparatus is much less demanding.

It is evident that the advantages cited above are of course still covered by the present application even if other modifications and variations are applied to the exemplary embodiment described above.

With the second screw-feeder system, in order to produce a solid conglomerate (Figure 5) or a hollow conglomerate (Figure 6), the loose material 12 is introduced in the chamber 11 and, by way of the particular shape of the screw feeder 29, there is a slow and progressive compression up to an extrusion channel 30, while steam is injected from the lateral surface of the screw feeder by means of the openings 20. The material that has reached the extrusion channel 30 assumes the shape thereof and continues baking. The extrusion channel 30 is heated. Moreover, steam is again introduced from the openings 20 in order to accelerate the baking process. In the final step of the process, the vapors generated by the material are aspirated from the suction channels 23.

Figure 6 illustrates a variation of the second method for producing a hollow conglomerate. What has been described for the first method for producing a hollow conglomerate in terms of steam injection and suction applies also to this system.

For example, the shape of the various components of the apparatus according to the invention might vary as a function of the amount of material that is treated on average and according to the shape of the extruded product. The number and type of steam injectors, as well as their arrangement in the first and second pressing chambers or in the screw feeder system, might also change.

Other modifications may of course affect the heating means of the baking channel, and certainly the means of producing and aspirating steam and the means for feeding the material into the first chamber of the apparatus according to the invention or into the screw feeder may certainly be various.

Other modifications of a practical and application-related kind to the constructive details may of course be applied to the invention without thereby abandoning the scope of the protection of the appended claims.

The disclosures in Italian Patent Application No. MO2005A000348 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An apparatus for producing conglomerates of various material by extrusion pressing of loose material, **characterized in that** it comprises a first pressing chamber (11) and a second pressing chamber (16, 16a; 30), said first chamber (11) being designed for a preliminary pressing operation and being connected to the second chamber (16, 16a; 30) which also constitutes an extrusion channel.

2. The apparatus according to claim 1, **characterized in that** it comprises means for feeding steam continuously or intermittently in any point of said chambers (11, 16, 16a; 30).

3. The apparatus according to claim 2, **characterized in that** the steam is fed into the first pressing chamber (11) by injection through channels or holes (19) provided on a piston (14) and on the sides of said first pressing chamber (11).

4. The apparatus according to claim 1, **characterized in that** the arrangement of said pressing chambers (11, 16, 16a; 30) can have a variable angle; a lateral surface (15a) of the second chamber acting as an abutment surface during the pressing operation.

5. The apparatus according to the preceding claims, **characterized in that** it comprises a perforated tube (21) which is arranged centrally with respect to the piston (15) of the second chamber (16, 16a; 30); lateral holes or openings (20) being arranged in the second chamber (16, 16a; 30), steam being injected from said holes directly into the internal central region of said chamber.

6. The apparatus according to claims 1 to 4, **characterized in that** it comprises a screw feeder with a variable pitch and/or diameter.

7. The apparatus according to one of the preceding claims, **characterized in that** the second chamber (16) is heated by means of channels (22); lateral holes or openings (20), through which steam is injected, being provided.

8. The apparatus according to one of the preceding claims, **characterized in that** it comprises a second tube (25) which is arranged coaxially with respect to said tube (21) and is designed to aspirate the vapors produced in the central region of the chamber during the step for baking the conglomerate contained therein.

9. The apparatus according to one of the preceding claims, **characterized in that** it comprises laterally, in the end part of the second chamber (16, 16a; 30), channels or holes (23) which are designed to aspirate the vapors produced in the extruded conglomerate during the baking step.

10. A method for extrusion pressing of loose various material, **characterized in that** it comprises:
a step of pre-pressing the various material which reaches a first chamber (11);
a second step of pressing the material in a second pressing and extrusion chamber (16, 16a; 30);
a step of baking an extruded element in said second chamber (16, 16a; 30);
a final step of generating vacuum and aspirating the gases produced in said second chamber (16, 16a; 30).

11. The method according to claim 10, **characterized in that** the injection of steam occurs also in the internal central region of the extruded element for the production of the hollow conglomerate.

12. The method according to claim 10, **characterized in that** the vapors produced in the internal central region of the extruded element are aspirated in the baking step after vacuum has been produced.

13. The method according to claim 10, **characterized in that** steam is injected and subsequently aspirated in order to accelerate the baking process.

14. The method according to claim 10, **characterized in that** in the extrusion channel there is a second channel in which steam passes in order to optimize baking.
